# EUROPEAN PATENT SPECIFICATION

(11) **EP 2 835 625 B1**
(45) Date of publication and mention of the grant of the patent: **03.10.2018**
(21) Application number: 14180125.8
(22) Date of filing: 07.08.2014
(51) Int. Cl.: G01M 7/02

(54) **Apparatus to simulate seismic events**
Vorrichtung zur Simulation seismischer Ereignissen
Appareil pour simuler des événements sismiques

(30) Priority: 08.08.2013 IT UD20130105
(43) Date of publication of application: 11.02.2015
(73) Proprietor: FE Friuli Estintori Srl, 33052 Cervignano del Friuli (UD) (IT)
(72) Inventor: Gonnelli, Luciano, 33052 Cervignano del Friuli (UD) (IT)
(74) Representative: Petraz, Gilberto Luigi

(56) References cited:
- US-A- 4 313 347
- US-A1- 2005 120 797
- US-A1- 2007 113 657
- US-B1- 6 257 067

## Description

### FIELD OF THE INVENTION

The present invention concerns an apparatus to simulate seismic events to educate users on how to react in dangerous conditions which can occur, for example, during an earthquake.

The apparatus according to the present invention can be applied, even if not exclusively, in a room of a school, a workplace or other.

### BACKGROUND OF THE INVENTION

Seismic events are natural events which start off a sequence of tremors and impart a movement of a vibratory character in a more or less extended zone on the earth's surface.

Depending on its magnitude, the consequences of a seismic event can be even catastrophic and to this end there are currently many studies linked to each event.

With the aim of containing the damage caused by seismic events, there are many precautionary measures taken which concern both the regulation of architectural norms concerning buildings and also the training of the people present in potentially seismic areas.

With regard to the process of training people, in many contexts, for example in schools or workplaces, specific courses are set up to teach people how to react in dangerous conditions which can occur during a seismic event.

As well as lessons of a completely theoretical nature, in order to educate people to identify potential areas for protection and shelter in a building, simulations of evacuation are also organized.

These tests are signaled for example by acoustic alarms and provide that the people involved in the evacuation adopt rules concerning behavior in a potential seismic event condition.

Such simulations, however, are not able to faithfully reproduce the actual conditions that occur during a seismic event and therefore are not able to arouse in people the actual sensations that one can feel during a seismic event.

A device to carry out tests in the field of vibrations is also known from the document US-A-2005/0120797, in order for example to test the resistance capacity of objects, machine parts, or machines, to vibrational stresses to which they can be subjected during their normal use.

This device has a support table connected to a support surface by means of a plurality of coil springs. The object to be tested is placed on the support table.

A vibrator is also associated to the support table, suitable to induce vibrational stresses on the support table and therefore on the object disposed thereon.

This device, however, is not suitable to simulate seismic events, since, already during normal use, as soon as a load acts on it, for example the weight of a person, it begins to oscillate on the helical springs creating a sensation of instability.

Moreover, the presence of the helical springs alone is not able to supply a faithful simulation of the oscillations that occur during a seismic event.

This device is therefore not directly applicable to simulate seismic events for example during the simulation of evacuation tests, in which it is necessary to simulate both conditions of normality and conditions of seismic events.

Other examples of apparatus for generating vibrations are disclosed in US-A-4.313.347 and in US-A-2007/113657.

One purpose of the present invention is to obtain an apparatus to simulate seismic events that allows to reproduce the vibration conditions which occur during a seismic event.

Another purpose of the present invention is to obtain an apparatus to simulate seismic events installable in a workplace, a school or place of entertainment to make people aware of seismic conditions.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, an apparatus to simulate seismic events according to the present invention comprises:
- a platform associated to a fixed support plane, such as a floor of a building for example,
- elastic elements associated to the platform and to the support plane and configured to keep the platform in suspension with respect to the support plane,
- actuation members able to be selectively activated to induce, in the platform, vibrations suitable to simulate a seismic event on the latter,
- at least one stabilizing member provided to constrain the position of the platform with respect to the support plane at least when the actuation members are de-activated, and configured to de-activate, at least partly, the action of the elastic elements, and
- at least one damping element provided to damp the oscillations induced on the platform.

In this way it is possible to perfect an apparatus, possibly integrated in a habitable space, to simulate a working, scholastic, public or similar context, which, when actuated, creates in the people who are present on the platform the same conditions and sensations that can occur during a seismic event.

The combination of the elastic elements and the damping elements allows to faithfully reproduce the oscillations to which a building for example is subjected during a seismic event, while the stabilizer member has the function of stabilizing the platform in order to confer solidity thereon, at least when the apparatus is not simulating a seismic effect.

This apparatus therefore has the purpose of making the people involved aware of the possible risks and dangers that can occur during a seismic event.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a plan view of an apparatus to simulate seismic events in accordance with the present invention;
- fig.2 is a section view from II to II in fig. 1 of an apparatus to simulate seismic events.

To facilitate comprehension, the same reference numbers have been used, where possible, to identify identical common elements in the drawings.

### DETAILED DESCRIPTION OF FORMS OF EMBODIMENT

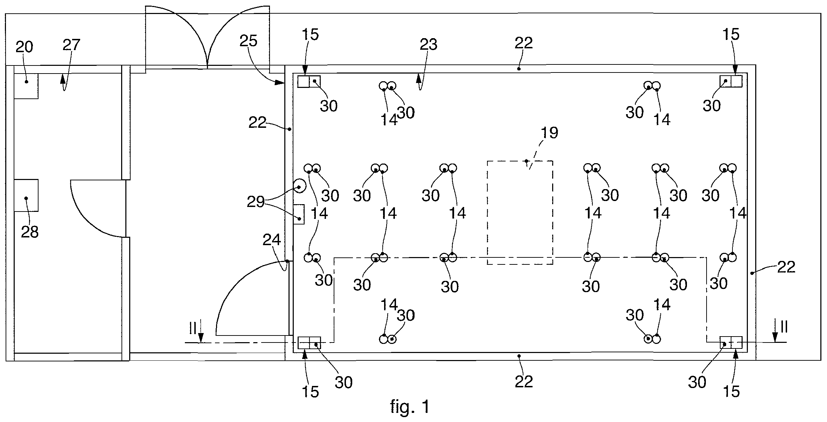

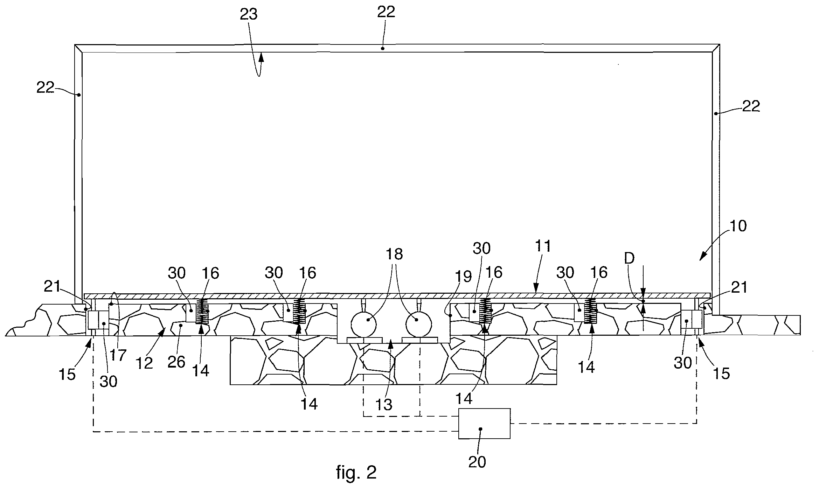

With reference to figs. 1 and 2 an apparatus to simulate seismic events is indicated in its entirety by the reference number 10 and comprises a support platform 11 on which furnishing elements can be disposed such as tables, cupboards, chairs, to simulate a workplace, a school, a public place.

The platform 11 can comprise a panel, made of wood for example, or sheet metal, polymer material or similar, to define a surface which can be walked on and is accessible for users.

One possible solution of the present invention provides that the platform 11 comprises a metal frame, for example defined by a plurality of tubular elements suitably connected to each other, on which at least a panel is fixed to define a surface which can be walked on and is accessible to users.

The panel can be made of wood, sheet metal, plastic materials or possible combinations thereof.

The platform 11 is associated to a fixed support plane 12 such as a floor of a building as shown in fig. 2.

In the form of embodiment shown in fig. 1, the platform 11 has a rectangular plan shape, even if a different spatial expansion thereof is not excluded.

The support plane 12 can be defined by the ground in which the platform 11 is installed, by a cast of concrete 26 as shown in fig. 2, or by other constructions or constructive elements suitable to define a fixed support layer to support the platform 11.

The support plane 12 has a support surface 17 above which the platform 11 is disposed, distanced therefrom.

Possible solutions provide that the platform 11 is distanced from the support surface 17 by a distance D comprised between 5mm and 20mm.

The platform 11 is kept suspended, that is, raised with respect to the support plane 12, by means of a plurality of elastic elements 14 associated to the platform 11 and to the support plane 12.

Some solutions of the invention provide that the elastic elements 14 are disposed with their axis of work substantially orthogonal to the platform 11, and are able to elastically support possible loads in a direction orthogonal to the platform 11.

Possible forms of embodiment, not shown in the drawings and possibly combinable with forms of embodiment described here, can provide that the elastic elements 14 are also located in a direction substantially parallel to the plane defined by the platform 11. In this case the elastic elements 14 can be attached, for example, on the lateral edges of the platform 11 and contain possible lateral oscillations of the latter.

The elastic elements 14 can be chosen from a group consisting of helical springs, cup springs, leaf springs or other types of elastic elements.

In the form of embodiment shown in fig. 2 the elastic elements 14 comprise helical springs of the compression type.

The helical springs can be made of steel with a diameter of the wire of about 12mm and an external winding diameter comprised between 70mm and 100mm, preferably between 75mm and 85mm.

In possible implementations of the present invention, the helical springs have an elasticity constant comprised between 30 and 50 N/mm, preferably about 40 N/mm.

In the form of embodiment shown in fig. 1, a plurality of elastic elements 14 are provided, uniformly distributed on the surface of the platform 11.

In accordance with a possible solution of the present invention, the elastic elements 14 are disposed according to a matrix distribution, that is, in the points of intersection between lines and columns.

One possible solution of the present invention can provide that for each square meter of surface extension of the platform 11 four elastic elements 14 are provided.

In the form of embodiment shown in fig. 2, the support plane 12 is provided with a plurality of housing seatings 16 each of which is configured to partly accommodate at least one of the elastic elements 14 and keep them partly protruding with respect to the support surface 17 of the support plane 12, in order to contact the platform 11.

The housing seatings 16 are made transversely, in this case substantially orthogonal, with respect to the support surface 17.

The housing seatings 16 can be made for example with coring operations of the support plane 12.

In other forms of embodiment of the present invention, the apparatus 10 can comprise damping elements 30 provided to damp the oscillations that are imparted to the platform 11 during its use. The damping elements 30, combined with the elastic action of the elastic elements 14, allow to damp the elastic oscillations, obtaining a more faithful reproduction of a seismic event for example.

In accordance with possible solutions the damping elements 30 can be associated, or integrated, with the elastic elements 14.

In accordance with possible solutions, the damping elements 30 can be chosen from a group comprising pneumatic dampers, magnetic effect dampers, hydraulic or friction dampers, or the mass damper type.

Actuation members 13 are associated to the platform 11, configured to induce in the platform 11 vibrations suitable to simulate a seismic event.

The actuation members 13 can include at least one vibrating member, in this specific case two vibrating members 18, connected to the platform 11 in order to transfer the vibrations generated thereby.

In accordance with possible forms of embodiment of the present invention, the vibrating members 18 are of the centrifugal excitation type and can generate values of centrifugal force comprised between 5kN and 20kN, preferably between 8kN and 15kN.

In the solution shown in fig. 2, the actuation members 13 are installed in a cavity 19 made in the support plane 12 and open toward the support surface 17.

The actuation members 13 are disposed protruding toward the outside with respect to the cavity 19 so as to contact the platform 11 during use.

Actuating the actuation members 13 determines the generation of vibrations which are transferred onto the platform 11 to simulate seismic events.

It is advantageous, in accordance with possible forms of embodiment, to provide that the actuation members 13 can be actuated independently from each other.

In accordance with possible forms of embodiment, the actuation members 13 can be activated simultaneously and in a synchronized manner to generate high-amplitude oscillation conditions, for example to simulate a seismic event of the undulatory type.

Other forms of embodiment of the present invention can provide that the actuation members 13 are activated in a non-synchronized manner with respect to each other, for example in counter phase, that is, with opposite directions of rotation, to trigger a substantially vertical oscillation in the platform 11 with respect to the plane defined by the platform 11, and simulate a seismic event of the sussultatory type.

To this purpose, at least the actuation members 13 are associated to a management and command unit 20 provided to selectively command the activation of the actuation members 13 and to determine their activation mode.

At least one stabilizer member 15, in this case a plurality of stabilizer members 15 are provided to stabilize and constrain the position of the platform 11 with respect to the support plane 12, at least when the actuation members 13 are de-activated.

The stabilizer members 15 can be separate elements and operatively independent from the elastic elements 14.

The stabilizer members 15 can have the function of at least partly deactivating the action of elastic suspension to which the platform 11 is subjected because of its installation on the elastic elements 14.

In this way, in the condition where the vibrating members 18 are de-activated, people can walk with no problem on the platform 11 without inducing oscillations thereon. In the non-operative condition, therefore, the platform 11 is constrained so that even the people walking thereon feel a sensation of stability and solidity.

According to possible forms of embodiment, the stabilizer members 15 can comprise damping elements, for example the same damping elements 30 described above.

Indeed, the damping elements 30 have the function of damping the oscillations to which the platform 11 is subjected, until they are completely canceled out.

In possible solutions, the action of the damping elements 30 can be selectively controlled and regulated, even during use, in order to suitably manage the damping action on the oscillations imparted to the platform 11 by the vibrating members 18. If one wishes to completely cancel the oscillations, the damping elements 30 are regulated so as to firmly stabilize the position of the platform 11 and prevent any possible oscillation thereof. In this way the damping elements 30 can carry out both the function of stabilizer and also the function of damping the oscillations of the elastic elements 14.

Moreover, the platform 11 can be constrained to the support plane 12, at least in the direction orthogonal to the surface extension of the latter, preventing a load acting on the platform 11, such as for example a person walking thereon, from triggering undesired vibrations thereon, because of the effect of the elastic elements 14.

In accordance with possible forms of embodiment of the present invention, the stabilizer members 15 are chosen from a group consisting of an electric actuator, a pneumatic actuator, a hydraulic actuator, a screw jack.

In the form of embodiment shown in fig. 1, the stabilizer members 15 are disposed in correspondence, or in direct proximity, to the vertexes of the platform 11, even if it is not excluded that, in other forms of embodiment, the stabilizer members 15 may be located in a central position, that is, internally with respect to the perimeter edge of the platform 11.

In accordance with what is shown in fig. 2, it can be provided that each of the stabilizer members 15 is located in a hole 21 made in the support plane 12 open toward the support surface 17.

The stabilizer members 15 can also be connected to the management and command unit 20, to provide their selective activation/de-activation also in accordance with the activation of the actuation members 13.

The apparatus 10 according to the present invention can also comprise a plurality of walls 22 provided to define with the platform 11 a habitable space 23 in which to simulate a domestic, working, scholastic or similar environment.

Possible forms of embodiment of the present invention provide that the walls 22 comprise panels made of sheet metal, with wooden boards, with layers of polymer material, with panels made of concrete, or with other types of materials suitable to the purpose, for example pre-fabricated panels.

Apertures 24 can be made in at least one of the walls 22 to allow access inside the habitable space 23, or to make windows for example.

In possible forms of embodiment, that shown in fig. 1 for example, the apparatus 10 comprises at least an auxiliary habitable space 25, with respect to the habitable space 23, configured to define a zone of passage and access to the habitable space 23.

In accordance with another form of embodiment, shown in fig. 1, the apparatus 10 comprises a technical space 27 in which at least the apparatuses to manage the apparatus 10 are installed, such as the management and command unit 20 for example.

In possible implementations of the present invention, the apparatus comprises a fire simulation unit 28 configured to emit smoke into the habitable space 23, into the auxiliary habitable space 25 or the technical space 27 in order to simulate a condition of fire.

In this way, the apparatus 10 according to the present invention assumes a double functionality, both of simulating a seismic event and simulating a fire which can occur as a consequence of a seismic event or independently thereof.

The fire simulation unit 28 can comprise a machine to generate non-toxic smoke.

The apparatus 10 can be provided in this case with alarm devices, provided to signal the presence of smoke or fire inside the habitable space 23, the auxiliary habitable space 25 or the technical space 27.

The apparatus 10 can also be provided with acoustic diffusers, provided to reproduce specific sounds or noises of the simulation carried out. This allows to increase the reproduction fidelity of a seismic event or a fire.

The apparatus 10 can also be provided with a device to extinguish fires, such as fire extinguishers, plants to supply water or gas, sprinkler plants or similar.

It is clear that modifications and/or additions of parts may be made to the apparatus 10 to simulate seismic events as described heretofore, without departing from the field and scope of the present invention.

For example, in possible implementations of the present invention, it can be provided that at least the habitable space 23 is associated to the support plane 12 to define therewith a transportable mono-block unit. In fact it can be provided that the support plane 12 is connected, or can be selectively connected, to the walls 22 to define a single unit therewith. The unit thus defined will be able to be removed, for example by suitable movement means such as a crane, positioned on a transport mean and transported to a desired site to simulate seismic events.

It is also clear that, although the present invention has been described with reference to some specific examples, a person of skill in the art shall certainly be able to achieve many other equivalent forms of apparatus to simulate seismic events, having the characteristics as set forth in the claims and hence all coming within the field of protection defined thereby.

## Claims

1. Apparatus to simulate seismic events comprising:
- a platform (11) associated to a support plane (12), fixed at least in use,
- elastic elements (14) associated to said platform (11) and to said support plane (12) and configured to keep said platform (11) in suspension with respect to said support plane (12),
- actuation members (13) able to be selectively activated to induce, in said platform (11), vibrations suitable to simulate a seismic event on the latter (11),
**characterized in that** said apparatus comprises
- at least one stabilizing member (15) provided to constrain the position of said platform (11) with respect to said support plane (12) at least when said actuation members (13) are de-activated, said stabilizing member (15) being a separate element and operatively independent from the elastic elements (14), and
- at least one damping element (30) provided to damp the oscillations induced on said platform (11).

2. Apparatus as in claim 1, **characterized in that** said damping element (30) is selectively controllable and able to be regulated, even during use, in order to manage the damping action on the oscillations imparted to the platform (11).

3. Apparatus as in claim 1 or 2, **characterized in that** said support plane (12) has a support surface (17) above which said platform (11) is disposed, distanced from the support surface (17) by a distance (D) comprised between 5mm and 20mm.

4. Apparatus as in claim 1, 2 or 3, **characterized in that** said elastic elements (14) are chosen from a group consisting of helical springs, cup springs, leaf springs.

5. Apparatus as in any claim hereinbefore, **characterized in that** said damping element (30) is integrated in said stabilizer member (15).

6. Apparatus as in any claim hereinbefore, **characterized in that** said damping element (30) is associated to said elastic elements (14).

7. Apparatus as in any claim hereinbefore, **characterized in that** said support plane (12) is provided with a plurality of housing seatings (16) each of which is configured to partially accommodate at least one of said elastic elements (14) and to keep them partly protruding with respect to the support surface (17) of the support plane (12) so as to contact said platform (11) during use.

8. Apparatus as in any claim hereinbefore, **characterized in that** said actuation members (13) comprise at least one vibrating member (18) of the centrifugal excitation type.

9. Apparatus as in claim 8, **characterized in that** said actuation members (13) comprise a plurality of vibrating members (18) able to be selectively actuated independently of each other.

10. Apparatus as in any claim hereinbefore, **characterized in that** said actuation members (13) are installed in a cavity (19) made in the support plane (12) and are disposed protruding toward the outside with respect to said cavity (19) so as to contact said platform (11) during use.

11. Apparatus as in any claim hereinbefore, **characterized in that** said actuation members (13) are associated to a management and command unit (20) provided to selectively command their activation.

12. Apparatus as in any claim hereinbefore, **characterized in that** said at least one stabilizing member (15) is chosen from a group consisting of an electric actuator, a pneumatic actuator, a hydraulic actuator and a screw jack.

13. Apparatus as in any claim hereinbefore, **characterized in that** it comprises a plurality of walls (22) provided to define, with said platform (11), a habitable space (23).

14. Apparatus as in claim 13, **characterized in that** said habitable space (23) is associated to said support plane (12) to define a transportable mono-block unit.

15. Apparatus as in claim 13 or 14, **characterized in that** it comprises a fire simulation unit (28) configured to emit smoke at least into said habitable space (23).

16. Method to simulate seismic events which provides to induce in a platform (11), by means of actuation members (13), vibrations to simulate a seismic event, said platform (11) being associated to a fixed support plane (12), elastic elements (14) being associated to said platform (11) and to said support plane (12) in order to keep said platform (11) in suspension with respect to said support plane (12) **characterized in that**, at least when said actuation members (13) are de-activated, it is provided to constrain the position of said platform (11) with respect to said support plane (12) by means of at least one stabilizing member (15), separated and operatively independent from the elastics elements (14), and to prevent an elastic oscillation of said platform (11) on said elastic elements (14), and in which a damping of the oscillations induced on said platform (11) is also provided by means of at least one damping element (30).

17. Method as in claim 16, **characterized in that** the damping of the oscillations is selectively controlled and regulated, even during use, in order to suitably manage the damping action on the oscillations imparted to the platform (11).

## Patentansprüche

1. Vorrichtung zur Simulation seismischer Ereignisse, umfassend:
- eine Plattform (11), die einer Unterstützungsebene (12) zugeordnet ist, die zumindest während der Verwendung fest ist,
- elastische Elemente (14), die der Plattform (11) und der Unterstützungsebene (12) zugeordnet und die dafür eingerichtet sind, um die Plattform (11) in Bezug auf die Unterstützungsebene (12) aufgehängt zu halten,
- Betätigungsglieder (13), die selektiv betätigbar sind, um, in der Plattform (11), Schwingungen anzuregen, die dafür geeignet sind, ein seismisches Ereignis an dieser Plattform (11) zu simulieren,
**dadurch gekennzeichnet, dass** die Vorrichtung umfasst:
- mindestens ein Stabilisierungsglied (15), das vorgesehen ist, um die Stellung der Plattform (11) in Bezug auf die Unterstützungsebene (12) zumindest dann festzuhalten, wenn die Betätigungsglieder (13) deaktiviert sind, wobei das Stabilisierungsglied (15) ein getrenntes Element ist, das von den elastischen Elementen (14) wirkmäßig unabhängig ist, und
- mindestens ein Dämpfungselement (30), das vorgesehen ist, um die an der Plattform (11) angeregten Oszillationen zu dämpfen.

2. Vorrichtung nach Anspruch 1, **dadurch gekennzeichnet, dass** das Dämpfungselement (30) selektiv steuerbar und, sogar während der Benutzung, einstellbar ist, um die Dämpfungswirkung auf die der Plattform (11) vermittelten Oszillationen handzuhaben.

3. Vorrichtung nach Anspruch 1 oder 2, **dadurch gekennzeichnet, dass** die Unterstützungsebene (12) eine Unterstützungsfläche (17) hat, über der die Plattform (11), von der Unterstützungsfläche (17) mit einem Abstand (D) zwischen 5 mm und 20 mm beabstandet, angeordnet ist.

4. Vorrichtung nach Anspruch 1, 2 oder 3, **dadurch gekennzeichnet, dass** die elastischen Elemente (14) aus einer Gruppe ausgewählt sind, die aus Schraubenfedern, Tellerfedern, Blattfedern besteht.

5. Vorrichtung nach einem der vorhergehenden Ansprüche, **dadurch gekennzeichnet, dass** das Dämpfungselement (30) in das Stabilisierungsglied (15) integriert ist.

6. Vorrichtung nach einem der vorhergehenden Ansprüche, **dadurch gekennzeichnet, dass** das Dämpfungselement (30) den elastischen Elementen (14) zugeordnet ist.

7. Vorrichtung nach einem der vorhergehenden Ansprüche, **dadurch gekennzeichnet, dass** die Unterstützungsebene (12) mit einer Vielzahl von Gehäusesitzen (16) versehen ist, von denen jeder dafür eingerichtet ist, um zumindest eines der elastischen Elemente (14) teilweise aufzunehmen und sie teilweise vorstehend in Bezug auf die Unterstützungsfläche (17) der Unterstützungsebene (12) zu halten, um die Plattform (11) während der Benutzung zu berühren.

8. Vorrichtung nach einem der vorhergehenden Ansprüche, **dadurch gekennzeichnet, dass** die Betätigungsglieder (13) zumindest ein Schwingglied (18) des Fliehkrafterregungstyps umfassen.

9. Vorrichtung nach Anspruch 8, **dadurch gekennzeichnet, dass** die Betätigungsglieder (13) eine Vielzahl von Schwinggliedern (18) umfassen, die unabhängig voneinander selektiv betätigt werden können.

10. Vorrichtung nach einem der vorhergehenden Ansprüche, **dadurch gekennzeichnet, dass** die Betätigungsglieder (13) in einem Hohlraum (19) installiert sind, der in der Unterstützungsebene (12) ausgebildet ist, und nach außen vorstehend in Hinblick auf den Hohlraum (19) angeordnet sind, um die Plattform (11) während der Benutzung zu berühren.

11. Vorrichtung nach einem der vorhergehenden Ansprüche, **dadurch gekennzeichnet, dass** die Betätigungsglieder (13) einer Verwaltungs- und Steuerungseinheit (20) zugeordnet sind, die vorgesehen ist, um ihre Betätigung selektiv zu steuern.

12. Vorrichtung nach einem der vorhergehenden Ansprüche, **dadurch gekennzeichnet, dass** das mindestens eine Stabilisierungsglied (15) aus einer Gruppe ausgewählt ist, die aus einem elektrischen Stellglied, einem pneumatischen Stellglied, einem hydraulischen Stellglied und aus einer Schraubenwinde besteht.

13. Vorrichtung nach einem der vorhergehenden Ansprüche, **dadurch gekennzeichnet, dass** sie eine Vielzahl von Wänden (22) umfasst, die vorgesehen sind, um, mit der Plattform (11), einen bewohnbaren Raum (23) zu definieren.

14. Vorrichtung nach Anspruch 13, **dadurch gekennzeichnet, dass** der bewohnbare Raum (23) der Unterstützungsebene (12) zugeordnet ist, um eine transportierbare Monoblockeinheit zu definieren.

15. Vorrichtung nach Anspruch 13 oder 14, **dadurch gekennzeichnet, dass** sie eine Brandsimulationseinheit (28) umfasst, die dafür eingerichtet ist, um Rauch zumindest in den bewohnbaren Raum (23) auszustoßen.

16. Verfahren zur Simulation seismischer Ereignisse, das vorsieht, in einer Plattform (11), über Betätigungsglieder (13), Schwingungen anzuregen, um ein seismisches Ereignis zu simulieren, wobei die Plattform (11) einer festen Unterstützungsebene (12) zugeordnet ist, wobei elastische Elemente (14) der Plattform (11) und der Unterstützungsebene (12) zugeordnet sind, um die Plattform (11) in Bezug auf die Unterstützungsebene (12) aufgehängt zu halten, **dadurch gekennzeichnet, dass**, zumindest dann, wenn die Betätigungsglieder (13) deaktiviert sind, es vorgesehen wird, die Stellung der Plattform (11) in Bezug auf die Unterstützungsebene (12) über mindestens ein Stabilisierungsglied (15), das getrennt und von den elastischen Elementen (14) wirkmäßig unabhängig ist, festzuhalten und eine elastische Oszillation der Plattform (11) auf den elastischen Elementen (14) zu verhindern, und worin eine Dämpfung der an der Plattform (11) angeregten Oszillationen über mindestens ein Dämpfungselement (30) auch vorgesehen wird.

17. Verfahren nach Anspruch 16, **dadurch gekennzeichnet, dass** die Dämpfung der Oszillationen, sogar während der Benutzung, selektiv gesteuert und eingestellt wird, um die Dämpfungswirkung auf die der Plattform (11) vermittelten Oszillationen in geeigneter Weise handzuhaben.

## Revendications

1. Appareil de simulation d'événements sismiques comprenant :
- une plate-forme (11) associée à un plateau de support (12), fixé au moins lors de l'utilisation,
- des éléments élastiques (14) associés à ladite plate-forme (11) et audit plateau de support (12), et conçus pour maintenir ladite plate-forme (11) suspendue par rapport audit plateau de support (12),
- des éléments d'actionnement (13) pouvant être actionnés sélectivement pour induire, dans ladite plate-forme (11), de vibrations aptes à simuler un événement sismique sur celle-ci (11),
**caractérisé en ce que** ledit appareil comprend
- au moins un élément stabilisateur (15) conçu pour limiter la position de ladite plateforme (11) par rapport audit plateau de support (12) au moins lorsque lesdits éléments d'actionnement (13) sont désactivés, ledit élément stabilisateur (15) étant un élément distinct et indépendant, du point de vue fonctionnel, des éléments élastiques (14), et
- au moins un élément d'amortissement (30) conçu pour amortir les oscillations induites sur ladite plate-forme (11).

2. Appareil selon la revendication 1, **caractérisé en ce que** ledit élément d'amortissement (30) peut être commandé de façon sélective et régulé, même en cours d'utilisation, afin de gérer l'action d'amortissement sur les oscillations transmises à la plate-forme (11).

3. Appareil selon la revendication 2, **caractérisé en ce que** ledit plateau de support (12) comporte une surface de support (17) au-dessus de laquelle ladite plate-forme (11) est placée, à une distance (D) de 5 m à 20 m de la surface de support (17) .

4. Appareil selon la revendication 1, 2 ou 3, **caractérisé en ce que** lesdits éléments élastiques (14) sont choisis dans un groupe composé de ressorts hélicoïdaux, ressorts Belleville, ressorts à lames.

5. Appareil selon n'importe laquelle des revendications précédentes, **caractérisé en ce que** ledit élément d'amortissement (30) est intégré dans ledit élément stabilisateur (15).

6. Appareil selon n'importe laquelle des revendications précédentes, **caractérisé en ce que** ledit élément d'amortissement (30) est associé auxdits éléments élastiques (14).

7. Appareil selon n'importe laquelle des revendications précédentes, **caractérisé en ce que** ledit plateau de support (12) possède une pluralité de sièges de logement (16) dont chacun est configuré pour recevoir partiellement des éléments élastiques (14) et pour les maintenir partiellement en saillie par rapport à la surface de support (17) du plateau de support (12), de façon à venir en contact avec ladite plate-forme (11) en cours d'utilisation.

8. Appareil selon n'importe laquelle des revendications précédentes, **caractérisé en ce que** lesdits éléments d'actionnement (13) comprennent au moins un élément vibrant (18) du type à excitation centrifuge.

9. Appareil selon la revendication 8, **caractérisé en ce que** lesdits éléments d'actionnement (13) comprennent une pluralité d'éléments vibrants (18) capables d'être sélectivement actionnés de façon indépendante les uns des autres.

10. Appareil selon n'importe laquelle des revendications précédentes, **caractérisé en ce que** lesdits éléments d'actionnement (13) sont installés dans une cavité (19) formée dans le plateau de support (12) et sont en saillie vers l'extérieur par rapport à ladite cavité (19) de façon à venir en contact avec ladite plateforme (11) en cours d'utilisation.

11. Appareil selon n'importe laquelle des revendications précédentes, **caractérisé en ce que** lesdits éléments d'actionnement (13) sont associés à une unité de commande et de gestion (20) conçue pour en commander leur activation de façon sélective.

12. Appareil selon n'importe laquelle des revendications précédentes, **caractérisé en ce que** ledit au moins un élément stabilisateur (15) est choisi dans un groupe composé d'un actionneur électrique, un actionneur pneumatique, un actionneur hydraulique et un vérin à vis.

13. Appareil selon n'importe laquelle des revendications précédentes, **caractérisé en ce qu**'il comprend une pluralité de parois (22) conçues pour définir, avec ladite plate-forme (11), un espace habitable (23).

14. Appareil selon la revendication 13, **caractérisé en ce que** ledit espace habitable (23) est associé audit plateau de support (12) pour définir une unité mono-bloc transportable.

15. Appareil selon la revendication 13 ou 14, **caractérisé en ce qu**'il comprend une unité de simulation d'incendie (28) configurée pour émettre de la fumée au moins dans ledit espace habitable (23) .

16. Procédé de simulation d'événements sismiques comportant l'induction de vibrations dans une plate-forme (11) au moyen d'éléments d'actionnement (13), afin de simuler un événement sismique, ladite plate-forme (11) étant associée à un plateau de support fixe (12), des éléments élastiques (14) étant associés à ladite plate-forme (11) et audit plateau de support (12) afin de maintenir ladite plate-forme (11) suspendue par rapport audit plateau de support (12), **caractérisé en ce qu**'au moins lorsque lesdits éléments d'actionnement (13) sont désactivés, la position de ladite plate-forme (11) est limitée par rapport audit plateau de support (12) au moyen d'au moins un élément stabilisateur (15), distinct et indépendant, du point de vue fonctionnel, des éléments élastiques (14), et une oscillation élastique de ladite plate-forme (11) sur lesdits éléments élastiques (14) est empêchée, et dans lequel un amortissement des oscillations induites sur ladite plate-forme (11) est également réalisé au moyen d'au moins un élément d'amortissement (30) .

17. Procédé selon la revendication 16, **caractérisé en ce que** l'amortissement des oscillations est commandé et régulé de façon sélective, même en cours d'utilisation, afin de gérer de façon convenable l'action d'amortissement sur les oscillations transmises à la plate-forme (11) .
